# EUROPEAN PATENT APPLICATION

(11) **EP 4 664 358 A1**
(43) Date of publication of application: **17.12.2025**
(21) Application number: 24181118.1
(22) Date of filing: 10.06.2024
(51) Int. Cl.: G06N 3/0464, G06N 3/063

(54) **METHOD AND APPARATUS FOR RUNNING NEURAL NETWORK MODEL**

(71) Applicant: Huawei Technologies Co., Ltd., Shenzhen, Guangdong 518129 (CN)
(72) Inventor: CAVIGELLI, Lukas, 80992 Munich (DE); YUZUGULER, Ahmet Caner, 80992 Munich (DE)
(74) Representative: Roth, Sebastian

(57) **Abstract**

This disclosure relates to artificial intelligence. A method applied to an apparatus for running a neural network is disclosed. The method comprises partitioning weights of a first layer and a second layer into multiple subsets of first weights and multiple subsets of second weights, respectively, which are distributed among multiple cores of the apparatus and are stored only in on-chip memory. Each core performs computation of the first layer using a first input partition and the respective subset of first weights, to obtain a first output partition of the first layer. The first output partition of the first layer is stored in the on-chip memory. Each core performs computation of the second layer using a respective first output partition of the first layer and the corresponding subset of second weights, to obtain a first output partition of the second layer. In this way, neural network computation efficiency can be enhanced.

## Description

### TECHNICAL FIELD

The present disclosure generally relates to the field of computer technology. For example, this disclosure relates to artificial intelligence. This disclosure presents a method and an apparatus for running a neural network model.

### BACKGROUND

In the field of artificial intelligence (Al), neural networks are typically used for performing machine learning. Convolutional neural networks (CNNs) are a type of machine learning method. A CNN model comprises a set of layers. Each layer comprises a set of weights and defines a specific algebraic operation with predefined properties (e.g., stride, padding, dilation etc.), where they may be classified based on their underlying algebraic operations, such as convolutional layers, activation layers, normalization layers etc. Layer weights are typically stored in a format of multi-dimensional tensors (or vectors) with predefined dimensions (e.g., input/output channels, kernel height/width etc.). The layer takes a set of input data, processes the input data using the set of weights based on the graph of compute operations and produces a set of output data. Each input and output data are also typically stored in the format of multi-dimensional tensor with predefined dimensions such as input channels and spatial dimensions (e.g., image height and width).

The layer weights of a CNN model are first trained in an offline process using training data, and then used in a service or application to produce output from new input data, which is known as inference.

### SUMMARY

Special AI accelerators (e.g., GPUs, NPUs, FPGAs etc.) are used to perform inference fast and efficiently in target systems (e.g., automobiles, satellites etc.). The AI accelerators consist of off-chip memory, shared on-chip memory, and a number of cores with dedicated on-chip memory and compute logic (CL). The memory organization of on-chip memory may include multiple levels of hierarchy (e.g., L0, L1, L2 etc.), where units of memory in various levels are shared by some or all cores, and may include various memory technologies. Likewise, the dedicated on-chip memory in the cores may also include multiple levels of hierarchy and may take various forms such as cache memory, scratchpad memory, buffers, register files etc. The off-chip memory, the on-chip memory in various levels of hierarchy as well as the cores can share data with each other through various forms of interconnection and network fabric, such as memory bus, direct links, network-on-chip etc.

The model weights and input data are initially stored on off-chip memory, then fetched to the on-chip shared memory, then to the dedicated on-chip memory of the cores, according to the order and mapping of execution dictated by the program that executes the inference. Then, the cores perform computation dictated by the program. The produced results are then either shared with other cores or written back to the off-chip memory to be used in the further steps of the program. The program may change the order and mapping of execution to optimize performance and efficiency based on the properties of the model and the hardware specifications of the AI accelerators.

The standard order of execution of CNNs is as follows: the AI accelerator fetches the weights and input data of the first layer from off-chip memory, perform computation, and write the output data of the first layer back to the off- chip memory. Then, it fetches the output data of the first layer and the weights of the second layer, perform computation, and write the output data of the second layer back to the off-chip memory. It repeats this process for all layers, where the order of layers is defined by the computation graph of the CNN model. This order of execution is often referred to as "layer-by-layer" execution.

For certain layers, the time it takes for fetching data from off-chip memory to the cores might be longer than the time it takes to perform computation depending on their properties. Thus, the inference performance becomes limited by the memory bandwidth. This is also known as memory bottleneck. Therefore, running a CNN model in a layer-by-layer order of execution may cause memory bottlenecks, and thereby reducing the performance and efficiency of AI accelerators.

In view of the above-mentioned problems, an objective of this disclosure is to mitigate the memory bottleneck problem in AI accelerators and to improve the performance and efficiency of the AI accelerators. These and other objectives are achieved by this disclosure, for instance, as described in the independent claims. Advantageous implementations are further described in the dependent claims.

A first aspect of this disclosure provides a method applied to an apparatus for running a neural network model (e.g., a neural network inference). The neural network model comprises a plurality of layers. The apparatus comprises a plurality of cores, a plurality of on-chip memories, and one or more off-chip memories. Each core is associated with one or more on-chip memories. The method comprises the following steps:
- obtaining, by the apparatus, a set of first weights of a first layer and a set of second weights of a second layer subsequent to the first layer;
- partitioning, by the apparatus, the set of first weights into multiple subsets of first weights;
- partitioning, by the apparatus, the set of second weights into multiple subsets of second weights;
- storing, by the apparatus, each subset of first weights in one or more on-chip memories associated with each core (respectively);
- storing, by the apparatus, each subset of second weights in the one or more on-chip memories associated with each core (respectively);
- performing, by each core, neural network computation of the first layer based on a first input partition and the corresponding subset of first weights, to obtain a first output partition of the first layer;
- storing, by each core, the first output partition of the first layer in the one or more on-chip memories associated with each core; and
- performing, by each core, neural network computation of the second layer based on the corresponding first output partition of the first layer and the corresponding subset of second weights, to obtain a first output partition of the second layer.

The multiple subsets of first weights are distributed among the multiple cores such that each core is assigned with a respective subset of first weights. The multiple subsets of second weights are distributed among the multiple cores such that each core is assigned with a respective subset of second weights.

Optionally, the apparatus may be in a form of CPU, GPU, DPU, NPU, ASIC or FPGA.

Optionally, any input partition, any output partition of any layer, and any subset of weights may be stored in various levels of on-chip hierarchy. The various levels of on-chip hierarchy may comprise register files; scratchpad memory; on-chip buffers; L0, L1, L2, L3, last-level cache. Any on-chip memory may be built based on memory technologies including but not limited to: SRAM, DRAM, eDRAM, SDRAM, EEPROM, NVRAM.

Optionally, the multiple cores may be adapted to exchange data through an on-chip interconnect fabric. The on-chip interconnect fabric may comprise any one of: bus, crossbar, direct links, network-on-chip.

By partitioning the weights and distributing the partitioned weights among the multiple cores, layer weights can fit in the one or more on-chip memories of each core. This enables efficient neural network execution for layers with relatively large weight sizes.

Further, more than two neural network layers can be fused to lead a reduction in off-chip memory bandwidth usage.

Further, this method can be used in one or multiple parts of a neural network.

Overall, the computational efficiency of executing the neural network can be improved.

Optionally, the neural network may be used for image or video processing (e.g., object recognition). The first input partition (and any other input partition in this disclosure) may be part of an image file (or a batch of frames of a video file). The neural network computation of each layer may be a convolution operation.

In an implementation form of the first aspect, the first output partition of the first layer is stored by each core only in the one or more on-chip memories.

That is, the first output partition of the first layer is not stored by each core in the one or more off-chip memories.

In a further implementation form of the first aspect, the method may further comprise:
concatenating, by the apparatus, the multiple first output partitions of the first layer corresponding to the multiple cores, to obtain a first output of the first layer.

In a further implementation form of the first aspect, the step of performing neural network computation of the second layer comprises:
- transferring, by the apparatus, each first output partition of the first layer between the multiple cores one by one;
- performing, by each core, neural network computation based on the transferred first output partition and a corresponding subset of second weights, to obtain an intermediate output of the second layer; and
- aggregating, by the apparatus, the multiple intermediate outputs of the second layer corresponding to the multiple cores, to obtain a first output of the second layer.

In a further implementation form of the first aspect, in response to determining that there is no further layer subsequent to the second layer, the method comprises storing, by each core, the first output partition of the second layer in the one or more off-chip memories.

In a further implementation form of the first aspect, the method may further comprises:
- performing, by each core, neural network computation of the first layer based on a second input partition and the corresponding subset of first weights, to obtain a second output partition of the first layer;
- storing, by each core, the second output partition of the first layer in the one or more on-chip memories associated with each core;
- performing, by each core of the apparatus, neural network computation of the second layer based on the corresponding second output partition of the first layer and the corresponding subset of second weights, to obtain a second output partition of the second layer; and
- storing the second output partition of the second layer in the one or more off-chip memories.

Optionally, for storing the second output partition of the second layer in the one or more off-chip memories, the multiple second output partitions of the second layer of the multiple cores may be concatenated, by the apparatus, to obtain a second output of the second layer. The obtained second output of the second layer may be stored in the one or more off-chip memories.

In a further implementation form of the first aspect, in response to determining that there is no further input partition subsequent to the second input partition, the method comprises:
concatenating, by the apparatus, the multiple first output partitions of the second layer and the multiple second output partitions of the second layer corresponding to the multiple cores, to obtain a final output.

In a further implementation form of the first aspect, the method may further comprise:
- obtaining input data of the first neural network layer;
- partitioning the input data into multiple input data partitions; and
- storing the multiple input data partitions in the one or more on-chip memories associated with each core, wherein each input data partition is used by each core as the input for performing the neural network computation of the first neural network layer.

In a further implementation form of the first aspect, the plurality of cores comprises a first core, a second core, a third core, and a fourth core. The multiple subsets of first weights comprises a first subset of first weights and a second subset of first weights. The neural network computation of the first layer is performed based further on a second input partition. For performing the neural network computation of the first layer, the method comprises:
- performing, by the first core, the neural network computation of the first layer based on the first input partition and the first subset of first weights;
- performing, by the second core, the neural network computation of the first layer based on the first input partition and the second subset of first weights;
- performing, by the third core, the neural network computation of the first layer based on the second input partition and the first subset of first weights; and
- performing, by the fourth core, the neural network computation of the first layer based on the second input partition and the second subset of first weights.

A second aspect of this disclosure provides an apparatus for running a neural network model. The neural network comprises a plurality of layers. The apparatus comprises a plurality of cores, a plurality of on-chip memories, and one or more off-chip memories. The apparatus is configured to:
- obtain a set of first weights of a first layer and a set of second weights of a second layer subsequent to the first layer,
- partition the set of first weights into multiple subsets of first weights,
- partition the set of second weights into multiple subsets of second weights,
- store each subset of first weights in one or more on-chip memories associated with each core, and
- store each subset of second weights in the one or more on-chip memories associated with each core.

Each core of the apparatus is configured to:
- perform neural network computation of the first layer based on a first input partition and the corresponding subset of first weights, to obtain a first output partition of the first layer,
- store the first output partition of the first layer in the one or more on-chip memories associated with each core, and
- perform neural network computation of the second layer based on the corresponding first output partition of the first layer and the corresponding subset of second weights, to obtain a first output partition of the second layer.

In an implementation form of the second aspect, each core is further configured to store the first output partition of the first layer only in the one or more on-chip memories.

That is, each core is configured not to store the first output partition of the first layer in the one or more off-chip memories.

In a further implementation form of the second aspect, the apparatus may be further configured to concatenate the multiple first output partitions of the first layer corresponding to the multiple cores, to obtain a first output of the first layer.

In a further implementation form of the second aspect, for performing neural network computation of the second layer, the apparatus is configured to:
- transfer each first output partition of the first layer among the multiple cores one by one;
- perform, by each core, neural network computation based on the transferred first output partition and a corresponding subset of second weights, to obtain an intermediate output of the second layer; and
- aggregate the multiple intermediate outputs of the second layer corresponding to the multiple cores, to obtain a first output of the second layer.

In a further implementation form of the second aspect, in response to determining that there is no further layer subsequent to the second layer, each core is configured to store the first output partition of the second layer in the one or more off-chip memories.

In a further implementation form of the second aspect, each core is configured to:
- perform neural network computation of the first layer based on a second input partition and the corresponding subset of first weights, to obtain a second output partition of the first layer;
- store the second output partition of the first layer in the one or more on-chip memories associated with each core;
- perform neural network computation of the second layer based on the corresponding second output partition of the first layer and the corresponding subset of second weights, to obtain a second output partition of the second layer; and
- store the second output partition of the second layer in the one or more off-chip memories.

In a further implementation form of the second aspect, in response to determining that there is no further input partition subsequent to the second input partition, the apparatus is configured to concatenate the multiple first output partitions of the second layer and the multiple second output partitions of the second layer corresponding to the multiple cores, to obtain a final output.

In a further implementation form of the second aspect, the apparatus may be configured to:
- obtain input data of the first neural network layer;
- partition the input data into multiple input data partitions; and
- store the multiple input data partitions in the one or more on-chip memories associated with each core, wherein each input data partition is used by each core as the input for performing the neural network computation of the first neural network layer.

In a further implementation form of the second aspect, the plurality of cores comprises a first core, a second core, a third core, and a fourth core. The multiple subsets of first weights comprises a first subset of first weights and a second subset of first weights. The neural network computation of the first layer is performed based further on a second input partition. For performing the neural network computation of the first layer, the apparatus is configured to:
- perform, by the first core, the neural network computation of the first layer based on the first input partition and the first subset of first weights;
- perform, by the second core, the neural network computation of the first layer based on the first input partition and the second subset of first weights;
- perform, by the third core, the neural network computation of the first layer based on the second input partition and the first subset of first weights; and
- perform, by the fourth core, the neural network computation of the first layer based on the second input partition and the second subset of first weights.

The apparatus of the second aspect may share the same optional features as the method of the first aspect, which are not repeated herein.

A third aspect of this disclosure provide a system comprising at least one apparatus according to the second aspect or any implementation form thereof.

A fourth aspect of this disclosure provides a computer program comprising instructions which, when the program is executed by a computer, cause the computer to carry out the method according to the first aspect or any implementation form thereof.

It has to be noted that all devices, elements, units and means described in the present disclosure could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms will be explained in the following description in relation to the enclosed drawings, in which
- FIG. 1: shows an example of a schematic view of a method for running a neural network;
- FIG. 2: shows an example of output partition concatenation;
- FIGs. 3A-3D: show an example of neural network computation without concatenation;
- FIG. 4: shows an apparatus for running a neural network;
- FIG. 5: shows an example of an apparatus for running a neural network;
- FIG. 6: shows a diagram of a method for running a neural network;
- FIG. 7: shows an example of a schematic view of a method applied to an apparatus,
- FIG. 8: shows a further example of a schematic view of a method applied to an apparatus,
- FIG. 9: shows an example of a neural network computation at a neural network layer; and
- FIG. 10: shows an application scenario of this disclosure.

### DETAILED DESCRIPTION OF EMBODIMENTS

A list of acronyms and abbreviations used in this disclosure is described in the following:
**CPU**: Central Processing Unit; **GPU**: Graphics Processing Unit; **DPU**: Data Processing Unit; **NPU**: Neural Processing Unit; **ASIC**: Application-Specific Integrated Circuit; **FPGA**: Field-Programmable Gate Array; **SRAM**: Static Random-Access Memory; **DRAM**: Dynamic Random-Access Memory; **eDRAM**: Embedded Dynamic Random-Access Memory; **SDRAM**: Synchronous Dynamic Random-Access Memory; **EEPROM**: Electrically Erasable Programmable Read-Only Memory; **NVRAM**: Non-Volatile Random-Access Memory.

In all the figures of this disclosure, corresponding elements may share the same features and function likewise.

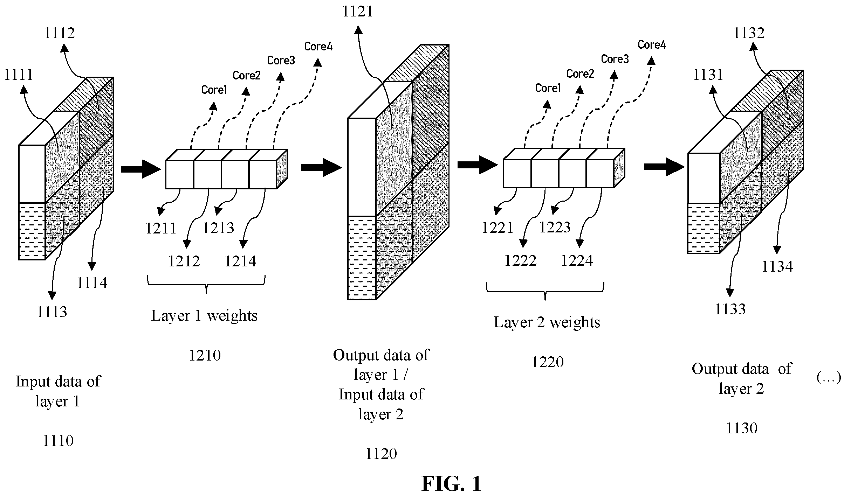

FIG. 1 shows an example of a schematic view of a method for running a neural network.

The method is applied to an apparatus, e.g., an AI accelerator. The apparatus comprises a plurality of cores, a plurality of on-chip memories, and one or more off-chip memories. For instance, an on-chip memory may be, e.g., a cache or the like. An off-chip memory may be, e.g., a DRAM or the like.

Each core is associated with one or more on-chip memories. Each core may be adapted to communicate with the one or more off-chip memories through a system bus or the like. The multiple cores may be adapted to communicate with each other through an interconnect fabric.

The neural network comprises a plurality of layers. For simplicity, only two layers are shown in FIG. 1. However, it shall be understood that this disclosure is applied to a neural network of any number of layers. Each layer may comprise a set of weight 1210, 1220. Usually, each set of weight is of a relatively large size (much larger than a size of a typical on-chip memory of a core).

As illustrated in FIG. 1, according to this disclosure, after obtaining a set of first weights 1210 of a first layer, the apparatus is configured to partition the set of first weights 1210 into multiple subsets of first weights 1211, 1212, 1213, 1214. Similarly, after obtaining a set of second weights 1220 of a second layer subsequent to the first layer, the apparatus is configured to partition the set of second weights 1220 into multiple subsets of second weights 1221, 1222, 1223, 1224. In this way, each subset of layer weight 1211, 1212, 1213, 1214, 1221, 1222, 1223, 1224 is of small size and can be fit in one or more on-chip memories associated with each core.

Optionally, the weight partitioning may be based on the number of cores and/or the size of each on-chip memory. In general, the apparatus may be configured to partition each layer weight set into any number of subsets of any size, as long as each subset of layer weight is fit in each on-chip memory.

The apparatus is configured to store each subset of first weights 1211, 1212, 1213, 1214 and each subset of second weights 1221, 1222, 1223, 1224 in the one or more on-chip memories associated with each core. Each subset of first weights and each subset of second weights may be stored correspondingly.

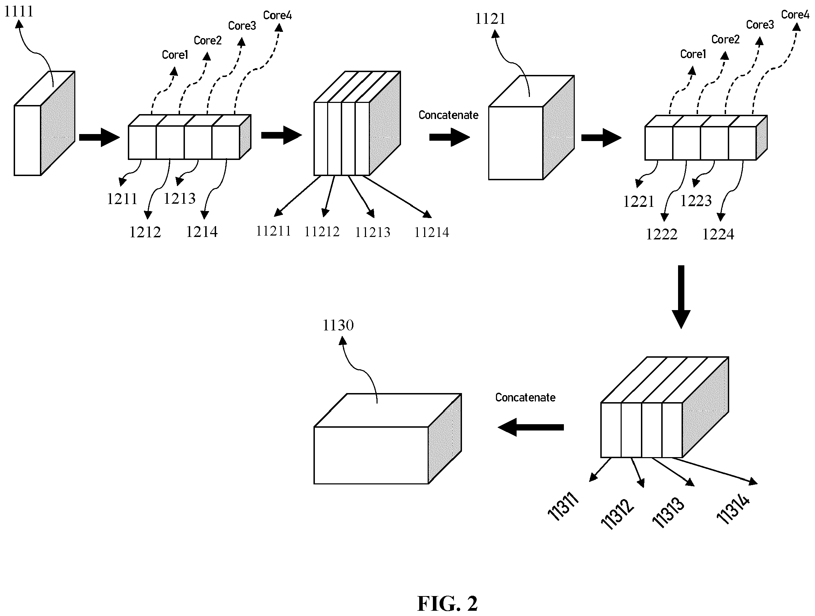

Each core is adapted to perform neural network computation of the first layer based on a first input partition 1111 and the corresponding subset of first weights 1211, 1212, 1213, 1214, to obtain a first output partition of the first layer 11211, 11212, 11213, 11214 (to be illustrated in FIG. 2).

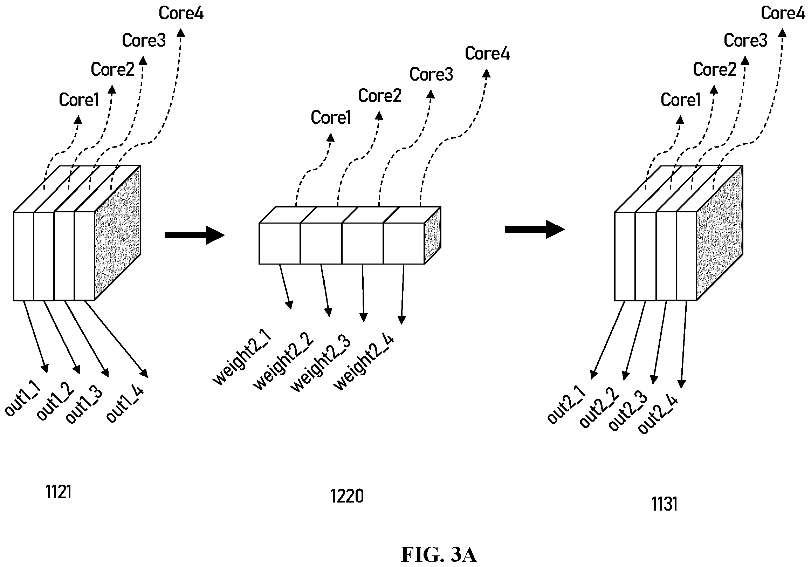

Each core is adapted to store the first output partition of the first layer in the one or more on-chip memories associated with each core and perform neural network computation of the second layer based on the respective first output partition of the first layer 11211, 11212, 11213, 11214 and the corresponding subset of second weights 1221, 1222, 1223, 1224, to obtain a first output partition of the second layer 11311, 11312, 11313, 11314 (to be illustrated in FIGs. 3A-3D).

In case that the second layer is the last layer, then a concatenation of all the first output partitions of the second layer 11311, 11312, 11313, 11314 form a first output 1131 of the second layer. The same steps are repeated for other input partitions. For instance, FIG. 1 illustrates three further input partitions 1112, 1113, 1114. Based on similar steps introduced above, a second output 1132 of the second layer, a third output 1133 of the second layer, and a fourth output 1134 of the second layer are similarly obtained. A concatenation of all the outputs of the second layer may form an output data 1130 of the second layer.

If the second layer is not the last layer, then the first output partitions of the second layer 11311, 11312, 11313, 11314 are stored in the one or more on-chip memories associated with each core, and are used as a respective input for a third layer (not shown) subsequent to the second layer. Accordingly, weights of the third layer are also partitioned like the first layer and the second layer.

It is noted that any intermediate output partition of any intermediate layer (e.g., the first output partition of the first layer 11211, 11212, 11213, 11214) is stored by each core only in the one or more on-chip memories associated therewith. That is, each core is configured not to store any intermediate output partition of any intermediate layer (e.g., the first output partition of the first layer 11211, 11212, 11213, 11214) in any off-chip memory.

In general, the weights of a neural network layer are partitioned and distributed across cores of an apparatus running a neural network. In this way, the layers can fit on on-chip memory of each core, enabling efficient execution for layers with larger weight sizes. Further, more layers can be fused, which leads to a more reduction in off-chip memory bandwidth usage.

Optionally, the layers may be types of grouped or dilated or transposed or strided or padded convolution layers, or fully-connected layers, or (self-)attentionlayers, or activation layers, or normalization layers.

Optionally, input data, intermediate output data, and weights may be stored not in dedicated on-chip memory of each core but in various levels of on-chip memory hierarchy including but not limited to register files, scratchpad memory, on-chip buffers, L0, L1, L2, L3, last-level cache. These memories are made of memory technologies including but not limited to SRAM, DRAM, eDRAM, SDRAM, EEPROM, NVRAM.

Optionally, the input data, output data, and weights may be in numerical formats of including but not limited to int4, int8, int16, fp4, fp8, hi-float8, bfloat16, fp16, fp32, fp64.

FIG. 2 shows an example of output partition concatenation. Based on the example of FIG. 1:
- core 1 executes neural network computation based on the first input partition 1111 and its respective subset of first weights 1211, to obtain its first output partition of the first layer 11211 (corresponding to core 1);
- core 2 executes neural network computation based on the first input partition 1111 and its respective subset of first weights 1212, to obtain its first output partition of the first layer 11212 (corresponding to core 2);
- core 3 executes neural network computation based on the first input partition 1111 and its respective subset of first weights 1213, to obtain its first output partition of the first layer 11213 (corresponding to core 3);
- core 4 executes neural network computation based on the first input partition 1111 and its respective subset of first weights 1214, to obtain its first output partition of the first layer 11214 (corresponding to core 4).

These first output partitions of the first layer are stored only in the one or more on-chip memories associated with each core, and are not written back to any off-chip memory. In some implementation forms, the apparatus may be adapted to concatenate the first output partitions of the first layer of all cores, to obtain a first output 1121 of the first layer. The first output 1121 of the first layer is then used as an input for the second layer. Then, similarly, the first output partitions of the second layer 11311, 11312, 11313, 11314 are obtained. A concatenation of all the first output partitions of the second layer is the first output 1130 of the second layer. If the second layer is the last layer, then the first output 1130 of the second layer is written back to the off-chip memory. That is, the first output partitions of the second layer 11311, 11312, 11313, 11314 are stored in the off-chip memory.

Optionally, for concatenating the first output partitions of the first layer of all cores, data from various levels of on-chip memory hierarchy may be gathered, including but not limited to L0, L1, L2, L3, last-level cache, though various on-chip interconnect fabric including but not limited to bus, crossbar, direct links, network-on-chip.

It is noted that the features of FIG. 2 can be similarly applied to other input partitions 1112, 1113, 1114, to obtain the second output 1132 of the second layer, the third output 1133 of the second layer, and the fourth output 1134 of the second layer, which are not repeated herein.

FIG. 3A-3D shows an example of neural network computation without concatenation. In alternative to the example shown in FIG. 2, after the first output partitions of the first layer 11211, 11212, 11213, 11214 are stored in the one or more on-chip memories associated with each, it is not necessary for the apparatus to perform concatenation to obtain the first output 1121 of the first layer. Alternatively, the apparatus may be adapted to perform neural network computation directly based on the first output partitions of the first layer 11211, 11212, 11213, 11214 and the subsets of second weights 1221, 1222, 1223, 1224.

For this purpose, the apparatus may be configured to:
- transfer each first output partition of the first layer among the multiple cores one by one;
- perform neural network convolution based on the transferred first output partition and a corresponding subset of second weights, to obtain an intermediate output of the second layer; and
- aggregate the multiple intermediate outputs of the second layer corresponding to the multiple cores, to obtain the first output of the second layer.

For instance, as illustrated in FIG. 3A-3D, an example for performing the neural network computation of the second layer is as follows with respect to obtaining the first output of the second layer.

Initialization: Initialize the first output of the second layer to zero.

Step 301 as illustrated in FIG. 3A:
- Core 1: perform convolution with out1_1 and weight2_1, and aggregates to out2_1;
- Core 2: perform convolution with out1_2 and weight2 _2, and aggregates to out2_2;
- Core 3: perform convolution with out1_3 and weight2_3, and aggregates to out2_3;
- Core 4: perform convolution with out1_4 and weight2_4, and aggregates to out2_4;
- Transferring the first output partitions of the first layer between the cores: out1_1→core4, out1_2→core1, out1_3→core2, out1_4→core3.

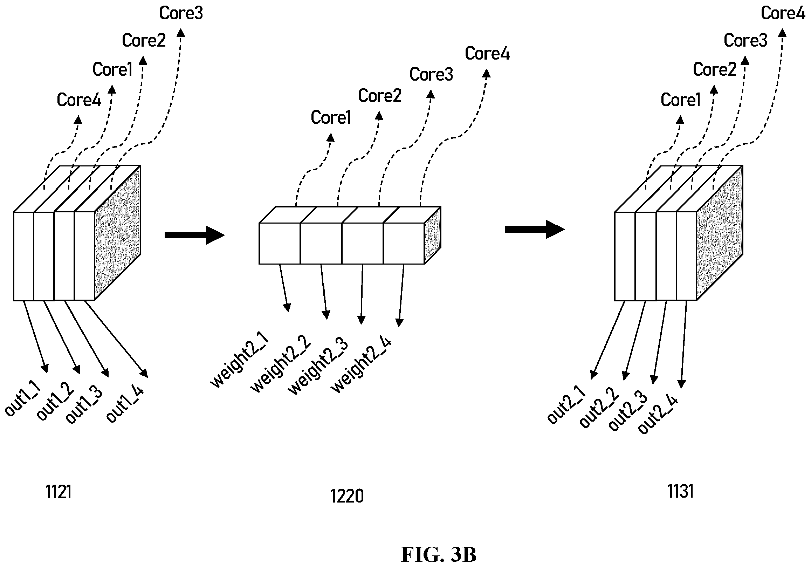

Step 302 as illustrated in FIG. 3B:
- Core 1: perform convolution with out1_2 and weight2_1, and aggregates to out2_1;
- Core 2: perform convolution with out1_3 and weight2_2, and aggregates to out2_2;
- Core 3: perform convolution with out1_4 and weight2_3, and aggregates to out2_3;
- Core 4: perform convolution with out1_1 and weight2_4, and aggregates to out2_4;
- Transferring the first output partitions of the first layer between the cores: out1_1→core3, out1_2→core4, out1_3→core1, out1_4→core2.

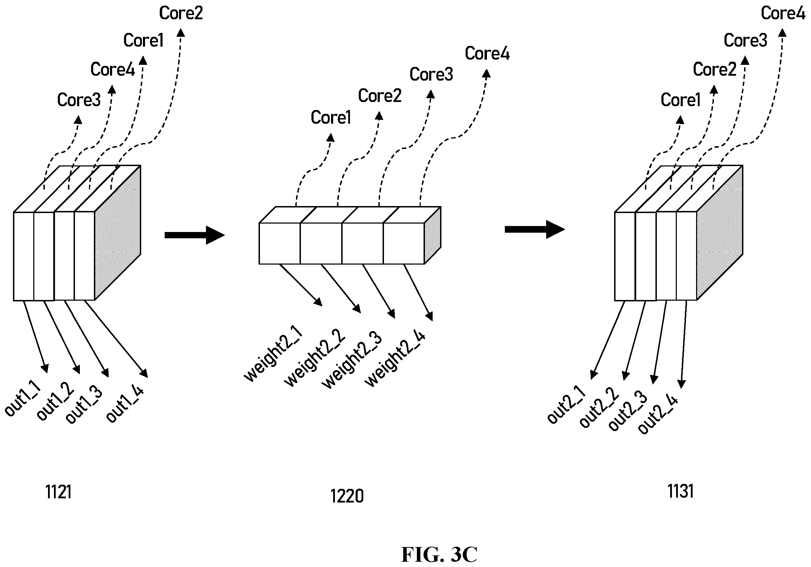

Step 303 as illustrated in FIG. 3C:
- Core 1: perform convolution with out1_3 and weight2_1, and aggregates to out2_1;
- Core 2: perform convolution with out1_4 and weight2_2, and aggregates to out2_2;
- Core 3: perform convolution with out1_1 and weight2_3, and aggregates to out2_3;
- Core 4: perform convolution with out1_2 and weight2_4, and aggregates to out2_4;
- Transferring the first output partitions of the first layer between the cores: out1_1→core2, out1_2→core3, out1_3→core4, out1_4→core1.

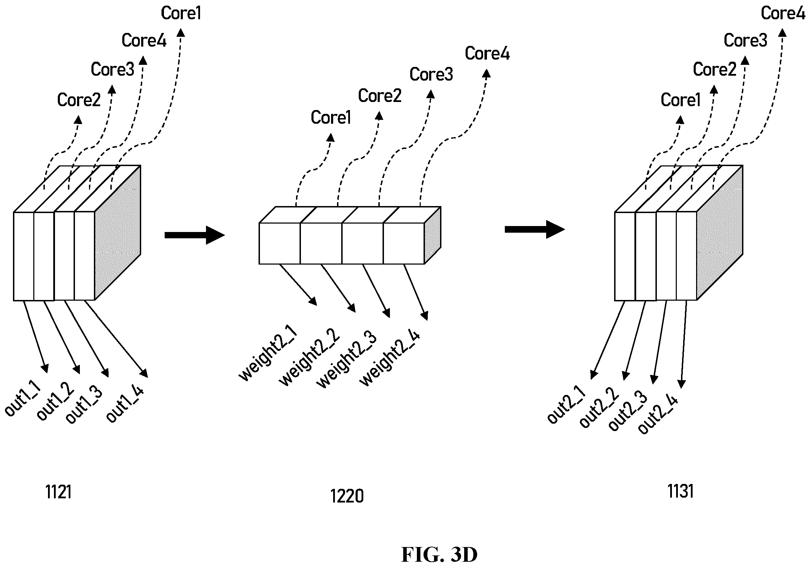

Step 304 as illustrated in FIG. 3D:
- Core 1: perform convolution with out1_4 and weight2_1, and aggregates to out2_1;
- Core 2: perform convolution with out1_1 and weight2_2, and aggregates to out2_2;
- Core 3: perform convolution with out1_2 and weight2_3, and aggregates to out2_3;
- Core 4: perform convolution with out1_3 and weight2_4, and aggregates to out2_4.
- The neural network computation is completed for the current layer.

After the first output partitions of the first layer are transferred between each core for one round, the network computation of the corresponding layer is completed. The out2_1, out2_2, out2_3, and out2_4 are concatenated, to obtain the first output of the second layer 1131. The same steps may be repeated for the subsequent layer if there is any.

It is noted that the out1_1, out1_2, out1_3, out1_4 in this example correspond to the first output partitions of the first layer 11211, 11212, 11213, 11214 illustrated in FIG. 2, respectively. The weight2_1, weight2_2, weight2_3, and weight2_4 correspond to the subsets of second weights 1221, 1222, 1223, 1224 in FIGs. 1-2, respectively. The out2_1, out2_2, out2_3, and out2_4 correspond to the first output partitions of the second layer 11311, 11312, 11313, 11314 in FIG. 2, respectively.

It is noted that transferring the first output partitions of the first layer between each core may be understood as to transferring the first output partitions of the first layer between on-chip memories associated with each core. For instance, from step 301 to step 302, the out1_1 is transferred to the one or more on-chip memories associated with core 4.

It can be seen that in this example, there is no need for the apparatus to concatenate any intermediate output partitions of any intermediate layer. It is noted that the reference sign 1121 shown in FIG. 1 is shown for simplicity only, which can be replaced by the first output partitions of the first layer 11211,11212, 11213, 11214. The same applies to the reference sign 1131, which can be replaced by the first output partitions of the second layer 11311, 11312, 11313, 11314.

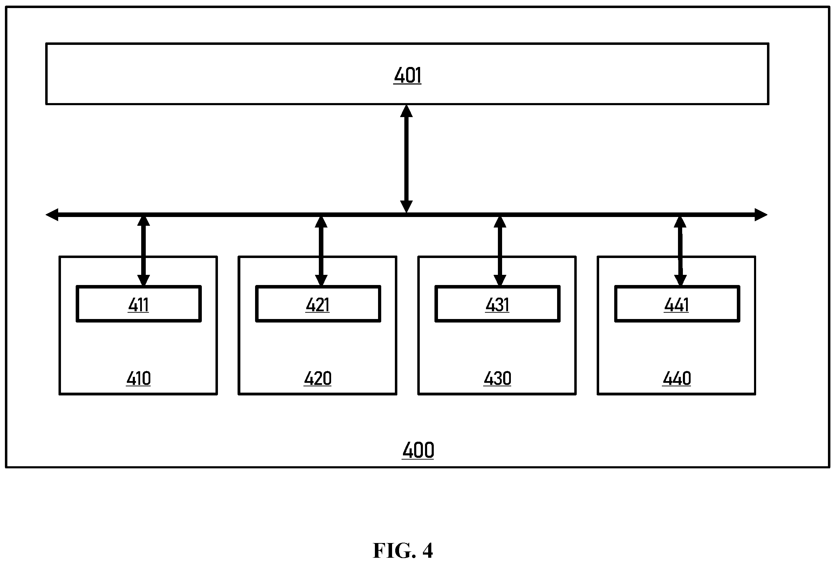

FIG. 4 shows an apparatus 400 for running a neural network. The apparatus 400 comprises a plurality of cores 410, 420, 430, 440 and one or more off-chip memories 401. Each core 410, 420, 430, 440 is associated with one or more on-chip memories 411, 421, 431, 441. The one or more off-chip memories 401 may be communicated with the one or more on-chip memories 411, 421, 431, 443 through a memory bus or the like.

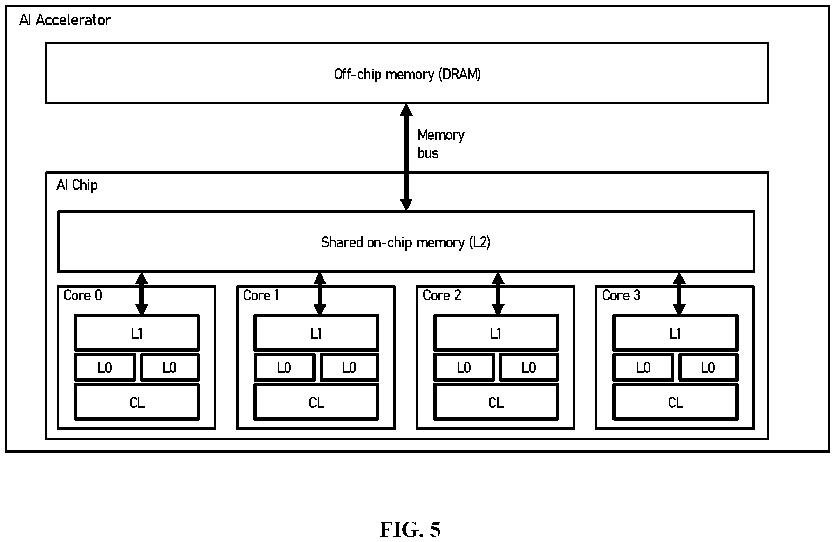

FIG. 5 shows an example of an apparatus for running a neural network. The apparatus may be built based on FIG. 4 and may be an AI accelerator (e.g., in the form of CPU, GPU, DPU, NPU, ASIC or FPGA, etc.) used to perform inference fast and efficiently in target systems (e.g., automobiles, satellites etc.). As shown in FIG. 5, the AI accelerator may comprise an off-chip memory (e.g.. DRAM), an optional shared on-chip memory, and a number of cores with dedicated on-chip memory and compute logic (CL). The memory organization of on-chip memory may include multiple levels of hierarchy (e.g., L0, L1, L2 etc.), where units of memory in various levels may be shared by some or all cores, and may include various memory technologies (e.g., HBM, DRAM, eDRAM, SRAM). Likewise, the dedicated on-chip memory in the cores may also include multiple levels of hierarchy and may take various forms such as cache memory, scratchpad memory, buffers, register files etc. The off-chip memory, the on-chip memory in various levels of hierarchy as well as the cores can share data with each other through various forms of interconnection and network fabric, such as memory bus, direct links, network-on-chip etc.

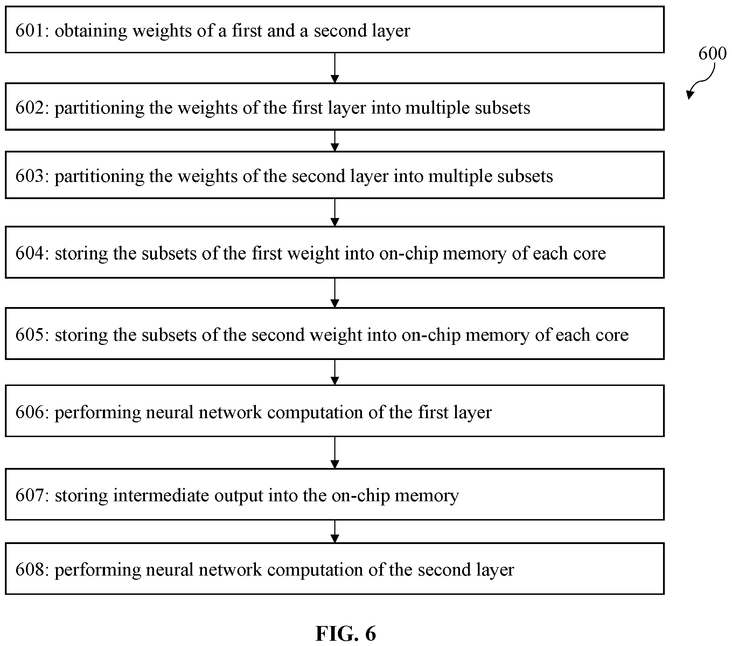

FIG. 6 shows a diagram of a method 600 for running a neural network according to this disclosure. The method 600 comprises the following steps:
- step 601: obtaining a set of first weights of a first layer and a set of second weights of a second layer subsequent to the first layer;
- step 602: partitioning the set of first weights into multiple subsets of first weights;
- step 603: partitioning the set of second weights into multiple subsets of second weights;
- step 604: storing each subset of first weights in one or more on-chip memories associated with each core;
- step 605: storing each subset of second weights in the one or more on-chip memories associated with each core;
- step 606: performing neural network computation of the first layer based on a first input partition and the corresponding subset of first weights, to obtain a first output partition of the first layer;
- step 607: storing the first output partition of the first layer in the one or more on-chip memories associated with each core;
- step 608: performing neural network computation of the second layer based on the corresponding first output partition of the first layer and the corresponding subset of second weights, to obtain a first output partition of the second layer.

The method 600 may share the same optional features introduced with FIGs 1-5, which are not repeated herein.

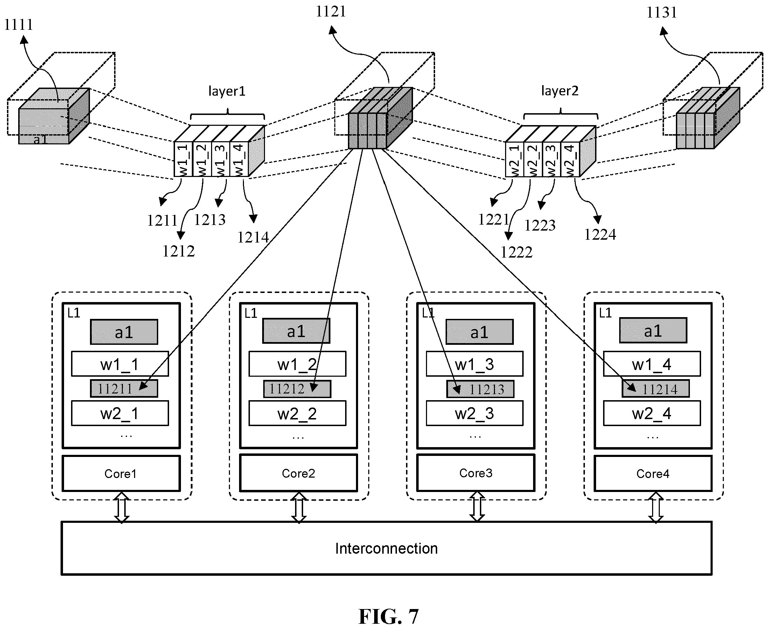

FIG. 7 shows an example of a schematic view of a method applied to an apparatus according to this disclosure. Following the method introduced in FIGs. 1-3 and 6, and the apparatus introduced in FIGs. 4-5, weights of each layer are partitioned and are distributed in the cores. Input data a1 in FIG. 7 may correspond to the first input partition 1111 in FIG. 1, w1_1 to w1_4 may correspond to subset of first weights 1211, 1212, 1213, 1214 in FIG. 1, w2_1 to w2_4 may correspond to subset of second weights 1221, 1222, 1223, 1224 in FIG. 1.

In general, this disclosure proposes to partition layer weights and execute the following steps:
Step 1: Each core in fetches a partition of the weights of a number of layers.
Step 2: Each core fetches the first partition (batch/spatial dimensions) of the input data.
Step 3: Each core performs the computation of the first layer and produces a sub-partition (output channel) of a partition (batch/spatial dimensions) of the output data of the first layer 0. The sub-partitions (output channel) of the partition (batch/spatial dimensions) of the output data of the first layer are temporarily stored in the shared on-chip memory and not written back to the off-chip memory.
Step 4: Each core performs the computation of the second layer and produces a sub-partition (output channel) of a partition (batch/spatial dimensions) of the output data of the second layer. Repeat step 4 until the last layer: then the subpartitions (output channel) of the partition (batch/spatial dimensions) of the output data of the last layer are written back to the off-chip memory. Step 5: Repeat step 2-4 for all remaining input partitions.

Optionally, the weights may be partitioned based on the number of cores. Additionally, input data may also be partitioned into activation windows such that each activation window can fit in an on-chip memory (e.g., an L1 cache). Each core is adapted to convolve an activation window with a partition of weight. Upon completing processing at a layer, all the cores may be adapted to send their results through an interconnection, optionally through a shared on-chip memory. The same process is repeated for all fused layers until the last layer.

In this way, the efficiency for executing a neural network can be improved.

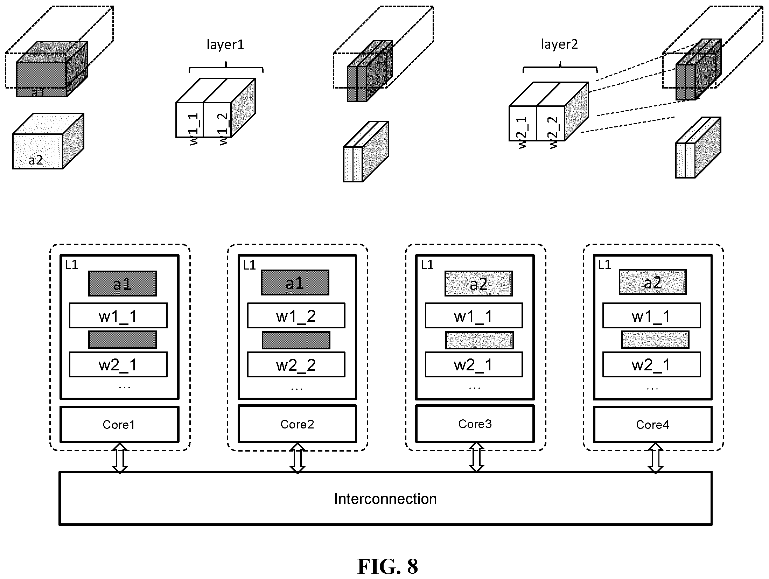

FIG. 8 shows a further example of a schematic view of a method applied to an apparatus according to this disclosure. For instance, for an apparatus with four cores, the input data may be partitioned into two partitions (batch/spatial dimensions), and weights of the first layer and the second layer are partitioned into two partitions (output channels). As shown in FIG. 8, each core is adapted to function as follows:
- core 1 fetches the first partition (a1) of input data and the first partition of the weights of layer 1 and 2 (w1_1 and w2_1);
- core 2 fetches the first partition (a1) of input data and the second partition of the weights of layer 1 and 2 (w1_2 and w2_2);
- core 3 fetches the second partition (a2) of input data and the first partition of the weights of layer 1 and 2 (w1_1 and w2_1); and
- core 4 fetches the second partition (a2) of input data and the second partition of the weights of layer 1 and 2 (w1_2 and w2_2).

The intermediate data are stored only in the one or more on-chip memories associated with each core. That is, they are not stored in any off-chip memory.

Each core is adapted to perform neural network computation of a respective layer based on the method introduced above in FIGs. 1-6, which are not repeated herein.

In this way, the efficiency of neural network execution can be further improved. It is noted that the number of cores, the number of input data partitions, and the number of layer weight partitions in this example are given for illustration purposes only. This example can be similarly expanded to any suitable number of cores (e.g., six cores, eight cores, etc.), and the input data and the layer weight can be divided into any suitable number of partitions in accordance with the number of the cores.

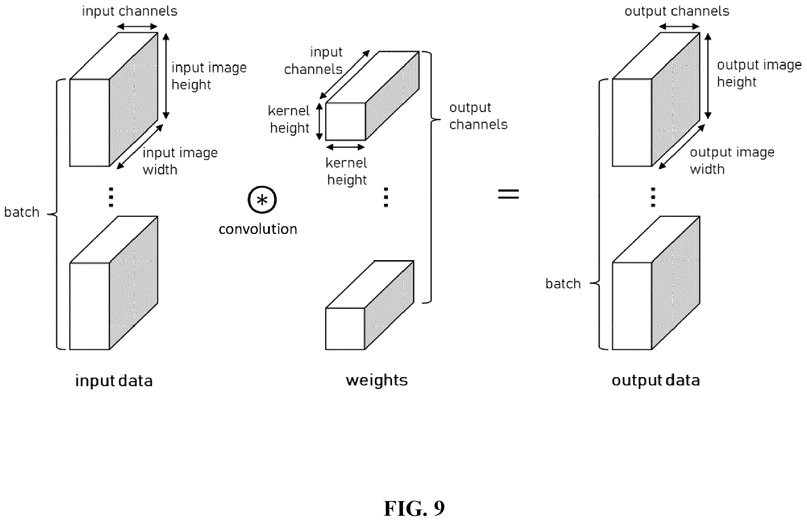

FIG. 9 shows an example of a neural network computation at a neural network layer. As shown in FIG. 9, layer weights are typically stored in the format of multi-dimensional tensors with predefined dimensions (e.g., input/output channels, kernel height/width etc.). The layer takes a set of input data, processes the input data using the set of weights based on the graph of compute operations and produces a set of output data. Each input and output data are also typically stored in the format of multi-dimensional tensor with predefined dimensions such as input channels and spatial dimensions (e.g., image height and width). In this disclosure, the neural network may be used for image and video processing (e.g., objection recognition).

Accordingly, the input data may be an image file or a batch of frames from a video file. The neural network computation at a layer may be a convolution operation.

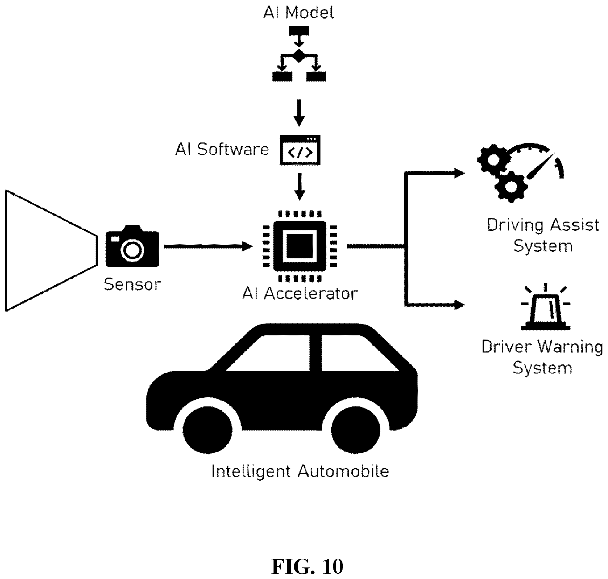

FIG. 10 shows an application scenario of this disclosure. As illustrated in FIG. 10, a system architecture of an intelligent automobile solution is shown. The input data (e.g., image, video, waveform etc.) are collected by onboard sensors (e.g., camera, LiDAR etc.) and transmitted to an onboard AI accelerator, which may be based on this disclosure. The AI accelerator runs an AI software in order to process the input data with a neural network model. The output data of the neural network model is then transmitted to other relevant systems onboard such as Driving Assist System or Driver Warning System in order to control the vehicle and/or interact with the driver. A further application scenario may be computer vision, e.g., applied in robotic systems.

It is noted that the apparatus of the present disclosure may comprise processing circuitry configured to perform, conduct, or initiate the various corresponding operations described herein, respectively. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The processing circuitry may comprise one or more processors and a non-transitory memory connected to the one or more processors. The non-transitory memory may carry executable program code which, when executed by the one or more processors, causes the device to perform, conduct or initiate the operations or methods described herein, respectively.

The present disclosure has been described in conjunction with various examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method (600) applied to an apparatus (400) for running a neural network model, wherein the neural network model comprises a plurality of layers; the apparatus (400) comprises a plurality of cores (410, 420, 430, 440), a plurality of on-chip memories (411, 421, 431, 441), and one or more off-chip memories (401); and the method comprises:
obtaining (601), by the apparatus, a set of first weights (1210) of a first layer and a set of second weights (1220) of a second layer subsequent to the first layer;
partitioning (602), by the apparatus, the set of first weights (1210) into multiple subsets of first weights (1211, 1212, 1213, 1214);
partitioning (603), by the apparatus, the set of second weights (1220) into multiple subsets of second weights (1221, 1222, 1223, 1224);
storing (604), by the apparatus, each subset of first weights (1211, 1212, 1213, 1214) in one or more on-chip memories (411, 421, 431, 441) associated with each core;
storing (605), by the apparatus, each subset of second weights (1221, 1222, 1223, 1224) in the one or more on-chip memories (411, 421, 431, 441) associated with each core;
performing (606), by each core, neural network computation of the first layer based on a first input partition (1111) and the corresponding subset of first weights (1211, 1212, 1213, 1214), to obtain a first output partition of the first layer (11211, 11212, 11213, 11214);
storing (607), by each core, the first output partition of the first layer (11211, 11212, 11213, 11214) in the one or more on-chip memories (411, 421, 431, 441) associated with each core; and
performing (608), by each core, neural network computation of the second layer based on the corresponding first output partition of the first layer (11211, 11212, 11213, 11214) and the corresponding subset of second weights (1221, 1222, 1223, 1224), to obtain a first output partition of the second layer (11311, 11312, 11313, 11314).

2. The method (600) according to claim 1, wherein the first output partition of the first layer (11211, 11212, 11213, 11214) is stored by each core only in the one or more on-chip memories (411, 421, 431, 441).

3. The method (600) according to claim 1 or 2, further comprising:
concatenating, by the apparatus, the multiple first output partitions of the first layer (11211, 11212, 11213, 11214) corresponding to the multiple cores, to obtain a first output of the first layer (1121).

4. The method (600) according to claim 1 or 2, wherein the step of performing neural network computation of the second layer comprises:
transferring, by the apparatus, each first output partition of the first layer between the multiple cores one by one;
performing, by each core, neural network computation based on the transferred first output partition and a corresponding subset of second weights (1221, 1222, 1223, 1224), to obtain an intermediate output of the second layer; and
aggregating, by the apparatus, the multiple intermediate outputs of the second layer corresponding to the multiple cores, to obtain a first output of the second layer (1131).

5. The method (600) according to any one of claims 1 to 4, wherein in response to determining that there is no further layer subsequent to the second layer, the method comprises:
storing, by each core, the first output partition of the second layer in the one or more off-chip memories.

6. The method (600) according to claim 5, further comprising:
performing, by each core, neural network computation of the first layer based on a second input partition (1112) and the corresponding subset of first weights (1211, 1212, 1213, 1214), to obtain a second output partition of the first layer;
storing, by each core, the second output partition of the first layer in the one or more on-chip memories (411, 421, 431, 441) associated with each core;
performing, by each core of the apparatus, neural network computation of the second layer based on the corresponding second output partition of the first layer and the corresponding subset of second weights (1221, 1222, 1223, 1224), to obtain a second output partition of the second layer; and
storing the second output partition of the second layer in the one or more off-chip memories.

7. The method (600) according to claim 5 or 6, wherein in response to determining that there is no further input partition subsequent to the second input partition, the method comprises:
concatenating, by the apparatus, the multiple first output partitions of the second layer (1131) and the multiple second output partitions of the second layer (1132) corresponding to the multiple cores, to obtain a final output.

8. The method (600) according to any one of claims 1 to 7, further comprising:
obtaining input data (1110) of the first neural network layer;
partitioning the input data (1110) into multiple input data partitions (1111, 1112, 1113, 1114); and
storing the multiple input data partitions (1111, 1112, 1113, 1114) in the one or more on-chip memories (411, 421, 431, 441) associated with each core, wherein each input data partition (1111, 1112, 1113, 1114) is used by each core (410, 420, 430, 440) as the input for performing the neural network computation of the first neural network layer.

9. The method (600) according to claim 1, wherein the plurality of cores comprises a first core (410), a second core (420), a third core (430), and a fourth core (440); the multiple subsets of first weights comprises a first subset of first weights and a second subset of first weights; and the neural network computation of the first layer is performed based further on a second input partition, wherein for performing the neural network computation of the first layer, the method comprises:
performing, by the first core, the neural network computation of the first layer based on the first input partition and the first subset of first weights;
performing, by the second core, the neural network computation of the first layer based on the first input partition and the second subset of first weights;
performing, by the third core, the neural network computation of the first layer based on the second input partition and the first subset of first weights; and
performing, by the fourth core, the neural network computation of the first layer based on the second input partition and the second subset of first weights.

10. An apparatus (400) for running a neural network model, wherein the neural network comprises a plurality of layers; the apparatus (400) comprises a plurality of cores (410, 420, 430, 440), a plurality of on-chip memories (411, 421, 431, 441), and one or more off-chip memories (401); and the apparatus (400) is configured to:
obtain a set of first weights (1210) of a first layer and a set of second weights (1220) of a second layer subsequent to the first layer,
partition the set of first weights (1210) into multiple subsets of first weights (1211, 1212, 1213, 1214),
partition the set of second weights (1220) into multiple subsets of second weights (1221, 1222, 1223, 1224),
store each subset of first weights (1211, 1212, 1213, 1214) in one or more on-chip memories (411, 421, 431, 441) associated with each core, and
store each subset of second weights (1221, 1222, 1223, 1224) in the one or more on-chip memories (411, 421, 431, 441) associated with each core;
wherein each core (410, 420, 430, 440) of the apparatus is configured to:
perform neural network computation of the first layer based on a first input partition (1111) and the corresponding subset of first weights (1211, 1212, 1213, 1214), to obtain a first output partition of the first layer (11211, 11212, 11213, 11214),
store the first output partition of the first layer (11211, 11212, 11213, 11214) in the one or more on-chip memories (411, 421, 431, 441) associated with each core,
perform neural network computation of the second layer based on the corresponding first output partition (11211, 11212, 11213, 11214) of the first layer and the corresponding subset of second weights (1221, 1222, 1223, 1224), to obtain a first output partition of the second layer (11311, 11312, 11313, 11314).

11. The apparatus (400) according to claim 10, wherein each core is further configured to store the first output partition of the first layer (11211, 11212, 11213, 11214) only in the one or more on-chip memories (411, 421, 431, 441).

12. The apparatus (400) according to claim 10 or 11, further configured to concatenate the multiple first output partitions of the first layer (11211, 11212, 11213, 11214) corresponding to the multiple cores, to obtain a first output of the first layer (1121).

13. The apparatus (400) according to any one of claims 10 to 12, wherein in response to determining that there is no further layer subsequent to the second layer, each core is configured to store the first output partition of the second layer (11311, 11312, 11313, 11314) in the one or more off-chip memories (401).

14. A system comprising an apparatus (400) according to any one of claims 10 to 13.

15. A computer program comprising instructions which, when the program is executed by a computer, cause the computer to carry out the method according to any one of claims 1 to 8.
